# EUROPEAN PATENT APPLICATION

(11) **EP 4 231 254 A1**
(43) Date of publication of application: **23.08.2023**
(21) Application number: 22305186.3
(22) Date of filing: 21.02.2022
(51) Int. Cl.: G06V 40/40

(54) **METHOD FOR TUNING AN ANTI-SPOOFING DETECTOR**

(71) Applicant: Thales Dis France SAS, 92190 Meudon (FR)
(72) Inventor: LI, Qiang, 92190 Meudon (FR); DANG, Thi Tra Giang, 92190 Meudon (FR); LELOUP, Laurent, 92190 Meudon (FR)
(74) Representative: Grevin, Emmanuel

(57) **Abstract**

The invention is a method for tuning an anti-spoofing detector comprising the steps of:
- Capturing a plurality (71) of biometric data from a subject identifier of a user (50) during an enrollment phase of said user;
- Selecting a rejection criterion (92) by using said plurality of biometric data, said rejection criterion defining a range of values for which a score generated by the anti-spoofing detector from a biometric data captured during an authentication phase is rejected; and
- Uniquely assigning said rejection criterion to said user.

## Description

### (Field of the invention)

The present invention relates to methods for tuning anti-spoofing detectors. It relates particularly to methods of tuning an anti-spoofing detector embedded in a biometric smart card.

### (Background of the invention)

Smart cards are portable small devices comprising at least a memory, a processor and an operating system for computing treatments. They may comprise services applications like payment or telecom applications. Such Smart cards embed at least one secure element that may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine which provides them with electric power either in contact mode or contactless mode.

A biometric smart card contain a biometric sensor like a fingerprint sensor that can contribute to the authentication of the user of the smart card. A biometric smart card may embed a biometric reference data corresponding to the user of the smart card. Such a biometric reference data is recorded during an enrollment phase. The biometric smartcard embeds a biometric algorithm designed to compare a data captured by the biometric sensor with the biometric reference data in order to authenticate the cardholder.

### (Summary of the Invention)

In general, an anti-spoofing detector generates metrics (that may be a score, a vector or a plurality of values) based on the biometric sensor input which could be an image (e.g. fingerprints) or other sensor data. The generated metrics are compared with a predefined value (also named operating point or global operating point) or set of predefined values to distinguish real from spoofing samples. The anti-spoofing detector also needs to satisfy different performance requirements such as false rejection rate (FRR) for real samples and spoof accept rate (SAR) for fake samples. The operating point is usually selected based on the score statistics of a large population of users. By doing so, the anti-spoofing detector makes trade-off between FRR and SAR. Usually, the operating point is frozen and assigned to an anti-spoofing algorithm as a fixed parameter to be used during the whole life of the device embedding the anti-spoofing algorithm. As a result, all biometric cards embedding the same anti-spoofing algorithm (detector) that are issued from a single batch use the same fixed operating point. Thanks to such a fixed operating point, the overall FRR performance meets the certification criteria (E.g. FRR < 1%) from a statistical point of view.

A drawback of using a fixed global operating point for a large number of biometric cards is that for some users the FRR may remain above an acceptable value. The classification scores of some users may be close to the fixed operating point which results in high false rejection for these users.

There is need to enhance tuning of an anti-spoofing algorithm embedded in a biometric smart card.

The invention aims at solving the above mentioned technical problem.

The inventors observed that, for each subject identifier of a user, their classification scores concentrate at certain region with bounded variance. A subject identifier may be one particular user finger/thumb, a group of fingers or the face for instance. The metrics probability distribution can be approximated by a probabilistic model. The probabilistic model may follow a Gaussian distribution or other types of distribution. By estimating the modeled distribution through a few enrolled samples, the inventors found that it is possible to select an enhanced operating point for a given user.

An object of the present invention is a method for tuning an anti-spoofing detector. The method comprises the following steps:
- Capturing a plurality of biometric data from a subject identifier of a user during an enrollment phase of said user;
- Selecting a rejection criterion by using said plurality of biometric data, said rejection criterion defining a range of values for which a score generated by the anti-spoofing detector from a biometric data captured during an authentication phase is rejected; and
- Uniquely assigning said rejection criterion to said user.

Advantageously, the anti-spoofing detector may use an anti-spoofing algorithm and the method may comprise the steps:
- Generating by the anti-spoofing algorithm a first set comprising scores of each of said plurality of biometric data;
- Selecting the rejection criterion by using both said first set and a model of score probability distribution that has been previously fed with both a second set and a third set generated by the anti-spoofing algorithm, said second set comprising scores of each of a plurality of fake biometric data and said third set comprising scores of each of a plurality of biometric data captured from a plurality of individuals.

Advantageously, the model may have been also fed with a number of additional sets generated by the anti-spoofing algorithm, each of said additional sets comprising scores of an individual archetype.

Advantageously, a Bayesian inference function may be applied to both said first set and the model for selecting the rejection criterion.

Advantageously, the anti-spoofing detector may use an anti-spoofing algorithm and the method may comprise the steps:
- Generating by the anti-spoofing algorithm a first set comprising scores of each of said plurality of biometric data;
- Selecting the rejection criterion by using both the first set and a model of score probability distribution that has been previously fed with a second set generated by the anti-spoofing algorithm and comprising scores of each of a plurality of fake biometric data.

Advantageously, the method may comprise the steps:
- Generating by the anti-spoofing detector an additional score of an additional biometric data captured from a user during a subsequent authentication phase; and
- Updating the rejection criterion by using said additional score.

Advantageously, the biometric data may be of fingerprint, iris or facial type.

Advantageously, the rejection criterion may be selected by a smart card.

An object of the present invention is a biometric appliance allocated to a user and comprising a biometric sensor and an anti-spoofing detector. The biometric appliance comprises at least a processing unit and instructions which cause said processing unit to:
- Capture a plurality of biometric data from a subject identifier of the user during an enrollment phase of said user;
- Select a rejection criterion by using said plurality of biometric data, said rejection criterion defining a range of values for which a score generated by the anti-spoofing detector from a biometric data captured during an authentication phase is rejected; and
- Uniquely assign said rejection criterion to said user.

Advantageously, the anti-spoofing detector may be configured to use an anti-spoofing algorithm and said instructions may cause said processing unit to:
- Generate by the anti-spoofing algorithm a first set comprising scores of each of said plurality of biometric data;
- Select the rejection criterion by using both said first set and a model of score probability distribution that has been previously fed with both second and third sets generated by the anti-spoofing algorithm, said second set comprising scores of each of a plurality of fake biometric data and said third set comprising scores of each of a plurality of biometric data captured from a plurality of individuals.

Advantageously, the model may have been also fed with a number of additional sets generated by the anti-spoofing algorithm, each of said additional sets comprising scores of an individual archetype.

Advantageously, a Bayesian inference function or method may be applied to both said first set and the model for selecting the rejection criterion.

Advantageously, the anti-spoofing detector may use an anti-spoofing algorithm and said instructions may cause said processing unit to:
- Generate by the anti-spoofing algorithm a first set comprising scores of each of said plurality of biometric data;
- Select the rejection criterion by using both the first set and a model of score probability distribution that has been previously fed with a second set generated by the anti-spoofing algorithm and comprising scores of each of a plurality of fake biometric data.

Advantageously, the instructions may cause the processing unit to:
- Generate by the anti-spoofing detector an additional score of an additional biometric data captured from a user during a subsequent authentication phase; and
- Update the rejection criterion by using said additional score.

Advantageously, the biometric appliance may be a smart card.

### (Brief description of the drawings)

Other characteristics and advantages of the present invention will emerge more clearly from a reading of the following description of a number of preferred embodiments of the invention with reference to the corresponding accompanying drawings in which:
- Fig. 1 shows a first exemplary flow diagram for tuning an anti-spoofing detector embedded in a biometric smart card according to an example of the invention;
- Fig. 2 shows a second exemplary flow diagram for tuning an anti-spoofing detector embedded in a biometric smart card according to an example of the invention;
- Fig. 3 shows a diagram of architecture of a biometric smart card according to an example of the invention;
- Fig. 4 shows an example of a set of anti-spoofing scores computed from fake biometric data and a set of anti-spoofing scores computed from authentic biometric data of several users;
- Fig. 5 shows an example of a set of anti-spoofing scores computed from authentic biometric data of several users and a set of anti-spoofing scores computed from authentic biometric data of a single user according to another example of the invention;
- Fig. 6 shows a fixed operating point and a dynamic operating point selected according to an example of the invention;
- Fig. 7 shows a large set of anti-spoofing scores computed from authentic biometric data of a single user according to another embodiment of the invention; and
- Fig. 8 shows examples of combination of anti-spoofing scores according to an embodiment of the invention.

### (Detailed description of the preferred embodiments)

The invention may apply to any type of anti-spoofing detector embedded in a biometric device associated with a user. The invention is well-suited for anti-spoofing detectors implemented in biometric smart cards.

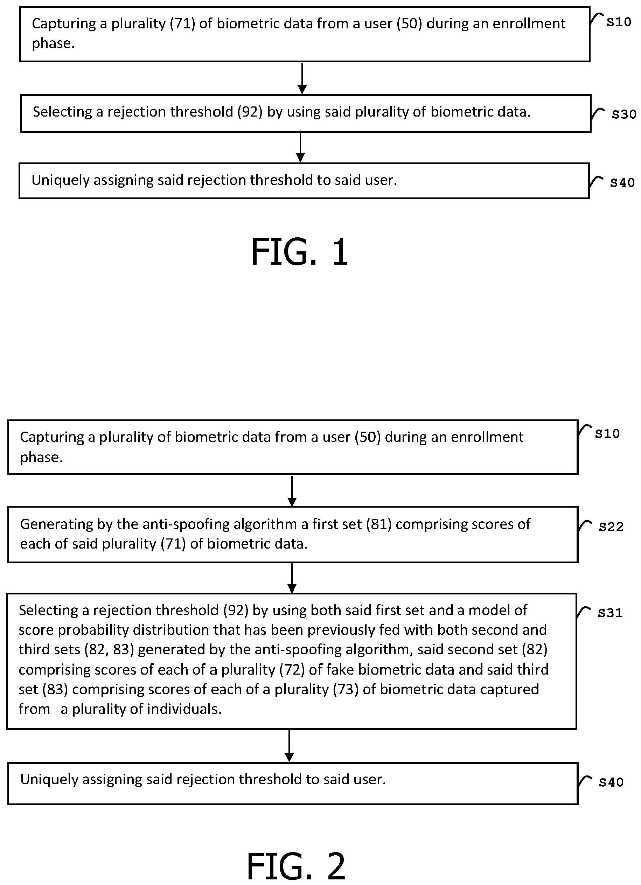

Figure 1 shows a first exemplary flow diagram for tuning an anti-spoofing detector embedded in a biometric smart card according to an example of the invention.

In this example, an anti-spoofing detector is embedded in a biometric smart card uniquely associated to a user 50 (i.e. a bank customer if the biometric smart card is a payment card) and comprising a fingerprint sensor. The anti-spoofing detector implement a specific anti-spoofing algorithm.

At step S10, the biometric smart card captures a plurality 71 of biometric data from a single user 50 during an enrollment phase of the user. During a conventional enrollment phase, the cardholder (i.e. the card user) presents their finger several times in order to allows the card to build a biometric reference (also called biometric template) that will be used later to authenticate the user during an authentication phase.

At step S30, the biometric smart card selects a rejection criterion 92 (also called dynamic operational point) by using the plurality 71 of captured biometric data. The rejection criterion may be a threshold or a set of reference values. The rejection criterion defines a range of values for which a score generated by the anti-spoofing detector from a biometric data captured during an authentication phase is rejected. In other words, during an authentication phase, a captured biometric data for which the score generated by the anti-spoofing detector belong to the range of values defined by the rejection criterion is rejected because considered as a fake biometric data.

Unlike conventional enrollment phases, a subset of the captured biometric data are also used to populate the plurality 71 of captured biometric data that is used to select the rejection criterion 92.

In some embodiments, the anti-spoofing detector may generate a set 81 of anti-spoofing scores computed from the plurality 71 of captured biometric data and use the set 81 to select the rejection criterion 92.

The rejection criterion may be the minimum acceptable value for the anti-spoofing scores. For instance, the rejection criterion may be selected as the limit that statistically corresponds to a false rejection rate (FRR) equal to 1.5% for the user 50.

At step S30, the biometric smart card uniquely assigns the selected rejection criterion 92 to the user 50. In other words, the biometric smart card specifically tunes the anti-spoofing detector only for the user who performed the enrollment phase. Thus, the anti-spoofing detector is customized according to the specifics of a single user. The assignment of the selected rejection criterion 92 to the user 50 can be done by recording the selected rejection criterion 92 as a parameter associated to the anti-spoofing detector (or anti-spoofing algorithm) in a memory of the biometric card uniquely allocated to the user 50.

If the user performs two separate enrollment procedures for two subject identifiers (E.g. two distinct fingers), the biometric smart card may assign the selected rejection criterion 92 to the anti-spoofing detector so that the rejection criterion 92 will be used regardless of which finger is presented in a subsequent authentication step. Alternatively, the biometric smart card may assign the selected rejection criterion 92 to the subject identifier used to build the rejection criterion 92. In such a case, the biometric smart is able to identify which finger is presented during an authentication step based on the result of the match algorithm and then to apply the relevant rejection criterion 92.

Figure 2 shows a second exemplary flow diagram for tuning an anti-spoofing detector embedded in a biometric smart card according to an example of the invention.

In this example, an anti-spoofing detector is embedded in a biometric card associated to a user 50 (i.e. genuine cardholder) and comprising a fingerprint sensor. The anti-spoofing detector may rely on a specific version of an anti-spoofing algorithm.

At step S10, the biometric card captures a plurality 71 of biometric data from the user 50 during an enrollment phase of the user. Typically, 8 to 18 biometric data may be captured in order to build the biometric template required for subsequent authentication of the user. According to the invention, the same captured biometric data (or a subset) may be used to populate the plurality 71 of biometric data which is used to select the rejection threshold 92 to be uniquely bound to the user 50.

At step S22, a first set 81 comprising scores of each of the plurality 71 (i.e. from user's samples) of biometric data is generated. The first set 81 may be generated by the anti-spoofing detector of the biometric card.

Then at step S31, the biometric card selects a rejection criterion 92 by using both said first set and a model of score probability distribution that has been previously built using both a second set 82 and a third set 83 generated by the anti-spoofing algorithm. The second set 82 comprises scores of each of a plurality 72 of fake biometric data. Preferably, the plurality 72 contains at least five hundred fake biometric data. Such fake biometric data may have been generated from real biometric data. Fake data may have been generated from a subset of the plurality 73 of biometric data for example.

The third set 83 comprises scores of each of a plurality 73 of biometric data captured from a plurality of individuals. Preferably, the plurality 73 contains at least two thousand genuine biometric data coming from at least one hundred individuals.

Preferably, second and third sets may have been generated by a device using the same specific version of the anti-spoofing algorithm. The device may be conventional computer so that the second set may be generated outside the biometric card.

The model of score probability distribution may be stored in the card memory as model parameters (e.g. mean and variance for a Gaussian distribution) or directly integrated in a specific algorithm associated to the model.

The second set 82 (anti-spoofing of fake biometric data) may be used to guarantee that the spoof accept rate - also named SAR - (i.e. rate of fake data that pass the check of the anti-spoofing detection.) remains below a target threshold when the rejection criterion 92 is applied during a later user authentication phase.

The third set 83 may be used to refine the rejection criterion 92 taking into account the peculiarities specific to the part of the body (of the user) which is analyzed by the biometric sensor. For example, the rejection criterion 92 may be customized for an individual having fingerprint that are difficult to read or of poor quality due to an illness or their profession.

The third set 83 may be used to infer a preliminary operating point from the statistical data coming from a high number of people, knowing that this preliminary operating point may then be refined (adapted/corrected) specifically for the user 50 by using the first set 81.

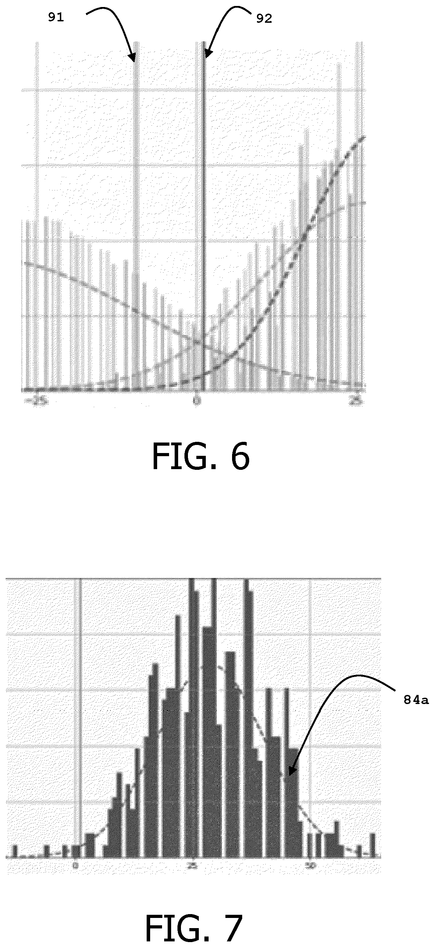

In some embodiments, the model of score probability distribution may also be built from a number of additional sets (84a, 84b, ..., 84n) generated by the anti-spoofing algorithm. Each of these additional sets comprises anti-spoofing scores of an individual archetype. Figure 7 shows an example of a set 84a belonging to the additional sets.

In some embodiments, a Bayesian inference function/method/rule or Bayes' rule (or other statistic methods) may be applied to both the first set 81 and the third set 83 (and/or additional sets) to estimate what would be the statistical curve of anti-spoofing scores computed from a large number of biometric samples taken from the single user 50. Thanks to usage of such a Bayesian inference method, it is possible to exploit a relatively small number of biometric data specific to the user 50. That is why the invention may be implemented by using a reduced set 81 of anti-spoofing scores coming from a limited number of biometric data captured during an enrollment phase of the user 50. For instance, although the user may present between 10 and 24 times their finger during an enrollment phase, a refined rejection criterion can be computed and allocated to the user. (I.e. to the anti-spoofing detector embedded in the card that is uniquely allocated to the user.)

In some embodiments, instead of using a Bayesian inference method, the biometric card may use a sampling based method to find out the optimal rejection criterion. By randomly generating many samples (scores) based on the three distributions and applying brute-force checks, it is possible to find an acceptable rejection criterion (like a threshold) having target performance in FRR and SAR for example.

At step S40, the biometric smart card uniquely assigns the selected rejection criterion (e.g. threshold) to the user whose biometric samples have contributed to the formation of the plurality 71 of biometric data. In practice, the biometric card uniquely assigns the selected rejection criterion to the anti-spoofing detector (or anti-spoofing algorithm) embedded in the biometric card allocated to the user. Thus the biometric card may tune the anti-spoofing detector that is uniquely allocated to the user.

Once an initial value of the rejection criterion 92 has been allocated to the appropriate user, the anti-spoofing detector is configured to use the current value of the rejection criterion 92 to determine if a newly captured biometric data is acceptable or not. (I.e. it successfully passes the anti-spoofing detection).

In some embodiments, the allocated rejection criterion 92 may be updated during one or more subsequent phases. In particular, the anti-spoofing detector may generate an additional score of a newly captured biometric data (i.e. additional biometric data captured from a user) during a later authentication phase where the biometric sensor is trigged for an authentication attempt. Then the biometric card may update the rejection criterion 92 by using the additional score. Such a continuous automatic enrichment of the rejection criterion 92 allows to refine the value of the rejection criterion 92 based on the new biometric data newly made available by the user. Thanks to some embodiment of the invention, the rejection criterion may be progressively updated so as to take into account slow characteristic shifting in the user's biometric features caused by aging and other factors.

Although described for the case of fingerprint, the invention may also be applied to many types of biometric data like iris or facial data.

The version of the anti-spoofing algorithm used by the anti-spoofing detector may be changed after the generation of the rejection criterion 92. Such a change may occur when the anti-spoofing algorithm is upgraded or patched for performance of security reasons for instance. In this case, the biometric card may generate an updated rejection criterion based on the model and the set 81. Content of the first set may have been stored in the card non-volatile memory. Alternatively, the plurality 71 of biometric data captured during the enrollment may have been stored in the card memory and the first set 81 may be recomputed from the stored plurality 71 of biometric data. The plurality 71 of biometric data may contain raw biometric data or remarkable points extracted from captured raw biometric data.

In some alternative embodiments, the model 38 of score probability distribution may be built only from the set 82 comprising scores of each of a plurality 72 of fake biometric data.

In some embodiments, the model 38 of score probability distribution may be built from a large set of anti-spoofing scores coming from biometric data captured from the user 50 during an enrollment phase of the user.

A large amount of biometric data may be obtained by capturing multiples images of the finger presented by the user. In some embodiments, the biometric sensor may try to capture a burst of images of a finger to generate many user's samples from a unique presentation of the finger or to capture many different parts of user's finger and generate a lot of fingerprints from a single presentation of the finger. By multiplying the number of finger presentations (during an enrollment phase), a large amount of biometric samples can be collected for a target user.

Then the rejection criterion 92 may be selected by using both the model and the large set of anti-spoofing scores coming from biometric data captured from the user 50. The selected rejection criterion (like a threshold) 92 is specific to user 50 and uniquely assigned to the user 50. In practice, the biometric card uniquely assigns the selected rejection criterion 92 to the anti-spoofing detector (or to the anti-spoofing algorithm) embedded in the biometric card that is uniquely allocated to the user 50.

The selection of rejection criterion 92 may be done by using a predefined performance rule. For instance, the rejection criterion 92 may be selected so as to obtain a false rejection rate (FRR) lower than 0.9 percent for the user 50.

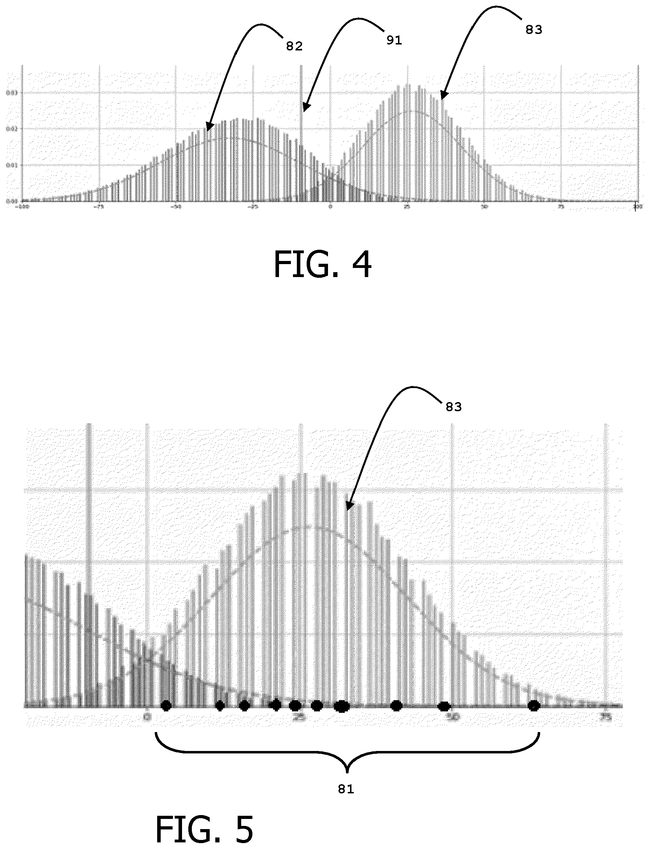

Figure 4 shows an example of a set 82 of anti-spoofing scores computed from fake biometric data and a set 83 of anti-spoofing scores computed from authentic biometric data of several users.

The left part of the histogram of Figure 4 depicts an example of the set 82 (comprising scores of each of the plurality 72 of fake biometric data) that is generated at a first stage (typically outside the biometric appliance) then used to build the model of score probability distribution.

The right side of the histogram of Figure 4 depicts an example of the set 83 (comprising scores of each of the plurality 73 of biometric data captured from a plurality of individuals) that is generated at a first stage (typically outside the biometric appliance) then used to build the model.

The set 83 provides a finger level score mean distribution of the genuine fingerprints of a large number of users/fingers. The finger level score mean distribution gives the probability of mean score value. As shown at Figure 4, a Gaussian curve may be deduced from the set 83. It is to be noted that other kinds of probability distribution may be used to model the set 83, like a Gamma distribution for instance. From the set 83, it is possible to extract the mean of finger level score mean, the variance of finger level score mean, the mean of finger level score variance and the variance of finger level score variance.

Based on both the set 82 and the set 83, a global operating point 91 (depicted by a vertical line) may be defined so that the overall FRR performance meets predefined performance criteria. For instance, the value of the global operating point 91 may be chosen so as to have an overall False Rejection Rate lower than 2 percent. The global operating point 91 make sense from a statistical point of view for a large number of cardholders in order to reach a predetermined FFR. Thanks to some embodiments of the inventions, the global operating point 91 may be customized to come to the rejection criterion 92 by using the set 81 (comprising scores of each of the plurality 71 of biometric data coming from a single user 50) to create a rejection criterion 92 specific to the user 50.

Figure 5 shows an example of a set 83 of anti-spoofing scores computed from authentic biometric data of several users and a set 81 of anti-spoofing scores computed from authentic biometric data of a single user according to another example of the invention.

The set 83 is similar to the one shown at Figure 4.

The set 81 (comprising scores of each of the plurality 71 of biometric data coming from a single user 50) contains only 10 scores (shown as black dots) that are distributed along the x-axis. In this example, all the anti-spoofing scores of set 81 have different values. In other examples, the set 81 may contain two or more scores having the same value.

The rejection criterion 92 may be identified using Bayesian Inference method to estimate the metrics distribution specific to the user 50 based on the mean of finger level score mean, the variance of finger level score mean, the mean of finger level score variance and the variance of finger level score variance (both found from the set 83) and the set 81 (enrolled fingerprint liveness scores specific to the user 50). Machine learning method in statistical inference may be used. One of the intermediate output of the rejection criterion 92 identification is the fingerprint liveness score distribution which gives the location of the Finger Level Score Mean (close to left tail or right tail of the curve corresponding to set 83) and the spread of scores. Based on this information, it is possible to select a rejection criterion (better than the Global operating point 91) for the user 50 based on some statistical control measure, such as FRR lower than one percent for instance.

Although described at finger level, metrics of a group of fingers can be used to compute the rejection criterion 92.

Figure 6 shows a fixed operating point and a dynamic operating point that has been selected according to an example of the invention.

The fixed operating point 91 (also called global operating point) may be defined so that the overall FRR performance meets predefined performance criteria as explained previously for Figure 4. Such a fixed operating point 91 is intended to apply to a large number of devices embedding the anti-spoofing detector, regardless of their user, that is to say without taking into account the particularities of each individual.

Thanks to some embodiments of the invention, a rejection criterion (like a threshold) 92 (also named dynamic operating point) specific to a user 50 may be defined so that the FRR performance adapted to the user meets predefined performance criteria.

In the example of Figure 6, the rejection criterion 92 has a value greater than the global operating point 91. Thus the rate of acceptance of fake data (I.e. the spoof accept rate also called SAR) may be reduced thanks to some embodiments of the invention. In other words, by tuning the anti-spoofing algorithm/detector for a specific user, the number of accepted spoofed data may be reduced. It should be noted that in the example of Fig. 6, the real fingerprints have higher anti-spoofing score values than spoof fingerprints. However other score scheme maybe different which use lower score values for real fingerprints.

Figure 7 shows a large set 84a of anti-spoofing scores computed from authentic biometric data of a single user according to another example of the invention.

The set 84a comprises scores of each of the plurality of biometric data coming from a single user 50. In this example, a big number of biometric data coming from a single user leads to a big number of anti-spoofing scores. Such a set 84a reflects an archetype of an individual.

Several sets (84a, ..., 84n) may be generated by the anti-spoofing algorithm from a plurality of distinct real users. Thus it is possible to get specific knowledge on as many profiles of user.

In some embodiments, the model of score probability distribution may be built from a number of these additional sets. Each of these additional sets comprises anti-spoofing scores of an individual archetype/profile.

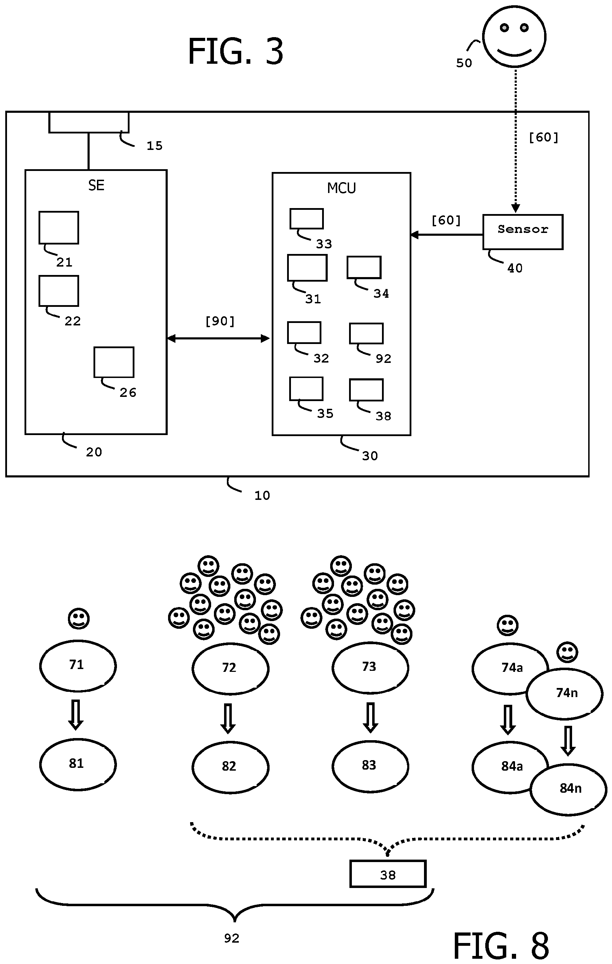

Figure 3 shows diagram of architecture of a biometric smart card according to an example of the invention.

In this example, the biometric smart card 10 is a banking smart card.

The smart card 10 comprises a secure chip 20 (also called secure element), a biometric sensor 40 and a controller 30 of the sensor. The controller 30 may be a processing unit (also named processor unit) like a microcontroller unit (MCU). The biometric sensor may be a conventional biometric sensor like a fingerprint sensor.

The controller 30 is coupled to the biometric sensor 40 and able to perform biometric pre-computation process on raw biometric data captured by the biometric sensor. The controller 30 is configured to retrieve captured biometric data 60 (also named raw biometric data) from the sensor 40 and to apply some treatments to the retrieved biometric data 60.

The controller 30 comprises an anti-spoofing detector 33 aiming at detecting spoofing attacks on the sensor 40. The anti-spoofing detector 33 is designed to execute an anti-spoofing algorithm 31 to distinguish real biometric data from fake data.

The controller 30 may comprise a second firmware 32 designed to extract remarkable items from the raw biometric data 60 collected by the sensor 40.

The controller 30 comprises a processor and a non-volatile memory (not shown). The non-volatile memory may store the firmware 31 and the firmware 32 which include program instructions that are executed by the processor to perform the features of the controller.

In the example of Fig. 3, the secure element 20 is a conventional smart card chip with additional features. The secure element 20 is able to contribute to a banking transaction with an external machine. For instance, the transaction may be a payment transaction or cash withdrawal. The secure element 20 comprises a reference biometric data 21 (also called biometric pattern) previously enrolled by the user 50.

In some embodiments, the secure element 20 may comprise an extracting engine 22 for extracting remarkable items from the biometric data 60 collected by the sensor 40.

The secure element 20 comprises a biometric algorithm (i.e. Match algorithm) 26 aiming at comparing the reference biometric data 21 with remarkable items extracted from the biometric data 60 collected by the sensor 40. The secure element 20 comprises an operating system (not shown).

The smart card 10 comprises a communication interface 15 which may be designed to exchange data with outside in contact mode, in contactless mode or both modes. The communication interface 15 is linked to the secure element 20.

The secure element 20 comprises a processor and a non-volatile memory (not shown). In one embodiment, the non-volatile memory stores program instructions which are executed by the processor to perform the functions of the secure element. In one embodiment, the functions of the secure element 20 may be implemented as pure hardware solution or a combination of firmware and hardware.

In some embodiments, the secure element 20 may comply with Specifications from EMV^{®} Contactless Specifications for Payment Systems Version 2.6 or Version 3.0.

In some embodiments, the secure element 20 may comply with Visa^{®} Integrated Circuit Card Specification (VIS) Version 1.6 and Visa^{®} Contactless Payment Specification (VCPS) Version 2.2.

In some embodiments, the secure element 20 may comply with M/Chip Advance Card Application Specification Version 1.2.2 or Version 1.2.3.

In some embodiments, the controller 30 and the secure element 20 may be separated hardware components.

In some embodiments, the controller 30 and the secure element 20 may be merged in a single hardware component adapted to perform features of both the controller 30 and the secure element 20.

The controller 30 comprises a biometric quality meter 35 configured to compute a quality index from the captured biometric data of a subject identifier (like a finger or a thumb) of the user. For example, the biometric quality meter 35 may execute the anti-spoofing algorithm to generate metrics of each captured fingerprints corresponding to one finger presented by the user.

The controller 30 comprises a model 38 of score probability distribution.

In some embodiments, the model has been built using both a set 82 comprising anti-spoofing scores of each of a plurality 72 of fake biometric data.

In some embodiments, the model has been built using a set 83 comprising anti-spoofing scores of each of a plurality 73 of biometric data captured from a plurality of individuals.

In some embodiments, the model has been built using a number of additional sets (84a, , ..., 84n) comprising anti-spoofing scores of as many archetypes of individual.

The model 38 may be stored in the controller 30 as a model specific algorithm customized with parameters 34 specific to the model. For instance, the model parameters 34 may comprise distribution mean and distribution variance for each set used to feed the model 38. Such model and parameters 34 may have been identified during a previous stage and stored in the biometric appliance 10 during a personalization phase.

The specific algorithm of the model is designed to select the rejection criterion 92 by using both model parameters 34 and a set 81 comprising scores of each of the plurality 71 (i.e. from user's samples) of biometric data coming from a subject identifier of the user.

In some embodiments, the specific algorithm of the model may be designed to apply a Bayesian inference function/method or Bayes' rule to the set 81 a subset of the model parameters to select the rejection criterion 92. The Bayesian method may be used to estimate the score distribution of the user 50, then it is possible to select the rejection criterion (e.g. threshold) based on the estimated user score distribution. For example, the specific algorithm may be set to choose the quantile equal to 1 percent which correspond to the FRR.

In some embodiments, the specific algorithm of the model may be designed to select the lowest anti-spoofing metrics (e.g. score) of set 81 as the rejection criterion 92.

The controller 30 is designed to store into its memory the rejection criterion 92 selected by the specific algorithm of the model. In some embodiments, the rejection criterion 92 may be stored in the secure element 20 coupled to the controller 30

In some embodiments, a previous version of rejection criterion has been already stored into the memory of the controller. It can be a default value (like the Global operating point common to a number of devices) or a rejection criterion previously selected according to an embodiment of the invention. The controller may be designed to update the previous version with the newly selected rejection criterion.

Depending on where is executed the algorithm to tune the rejection criterion and where is stored the rejection criterion, one or more data exchanges may occur between the sensor controller 30 and the Secure Element 20.

Supposing that the rejection criterion is already set and stored in Secure Element 20, the sensor may send the captured image to the controller 30 which may extract the candidate template from the image, in turn the controller may send the Candidate Template to Secure Element 20.

In some embodiments, the algorithm to tune the rejection criterion may be executed in the controller 30 and the result may be sent to the Secure Element 20 (note that this could be sent within the candidate template sent from the controller to the Secure Element) .

In some embodiments, the algorithm to tune the rejection criterion may be executed in Secure Element 20. In this case, there is no further exchange between the Secure Element 20 and the controller.

In some embodiments, both execution and storage of rejection criterion are done within the controller 30, then there is no exchange related to this between the controller and the Secure Element.

When executed to detect spoofing attacks, the anti-spoofing detector 33 is designed to use the stored rejection criterion 92 to differentiate real biometric data from fake biometric data.

Figure 8 shows examples of combination of anti-spoofing scores according to an embodiment of the invention.

A plurality 72 of fake biometric data may be identified from a large number of fake/cheated samples. Then a set 82 comprising scores of each of the plurality 72 of fake biometric data may be generated by applying the anti-spoofing algorithm. The set 82 may comprise several hundred of metrics/scores.

A plurality 73 of biometric data captured from a large number of individuals may be identified. Then a set 83 comprising scores of each of the plurality 73 of real biometric data may be generated by applying the anti-spoofing algorithm. Used biometric data may originated from several hundreds or thousands of individuals.

A plurality 74a of real biometric data captured from a unique individual may be identified. Then a corresponding additional set 84a comprising scores of each of the plurality 74 of real biometric data may be generated by applying the anti-spoofing algorithm. Similarly, several other plurality 74b, ..., 74n of real biometric data corresponding to as many different individuals may be identified and used to generate corresponding additional sets (84b,..., 84n). Each of the additional sets (84a,..., 84n) comprises anti-spoofing scores of an individual archetype. Each set 84x may comprise several hundred of metrics/scores.

Then the model 38 of score probability distribution (and its parameters 34) may be built from any combinations of one or more sets among the sets 82, 83, 84a, ... 84n.

In a specific embodiment, the model 38 may be built from a set 84x created from biometric data originated from the user 50, provided that the set 84x comprises a large number of metrics.

A plurality 71 of biometric data captured from a single user 50 during an enrollment phase of the user may be identified. Then a set 81 comprising scores of each of the plurality 71 of real biometric data may be generated by applying the anti-spoofing algorithm.

Then the rejection criterion 92 (like a threshold for instance) may be selected by using both the model 38 and the set 81.

Thanks to the invention, it is possible to customize for a given user the rejection criterion used by the anti-spoofing detector to distinguish real biometric data from fake biometric data.

Some embodiments of the invention allow to progressively refine the rejection criterion after the enrolment phase, during user's authentication operations carried out by the biometric appliance.

Biometric data captured during an enrolment phase is believed to be real, authentic and coming from the genuine user. Although in conventional enrolment procedures the anti-spoofing algorithm is not applied, it should be noted that according to some embodiments of the invention, the anti-spoofing algorithm is executed and used to select a refined rejection criterion that will be used during a later phase (I.e. after enrollment phase) when trying to authenticate the user during an authentication phase.

The invention is not limited to the described embodiments or examples. In particular, the described examples and embodiments may be combined.

The invention is not limited to biometric smart cards and applies to any biometric appliances allocated to a user, like an access badge or a connected watch or connected bracelet for instance.

The biometric appliance may embeds several biometric sensors (of same or different types) and several associated controllers. The invention may allow to refine the rejection criterion for any number of biometric sensors embedded in the biometric appliance.

Although examples of the invention has been provided in the banking domain, the invention also applies to other domains. For example, the biometric appliance may provide access to a physical building, room or area.

Although examples of the invention has been provided for a fingerprint sensor, it may apply to devices embedding any biometric sensor targeting various types of data: iris, voice, face, blood or palm print for examples.

## Claims

1. A method for tuning an anti-spoofing detector, **characterized in that** the method comprises:
- Capturing a plurality (71) of biometric data from a subject identifier of a user (50) during an enrollment phase of said user;
- Selecting a rejection criterion (92) by using said plurality of biometric data, said rejection criterion defining a range of values for which a score generated by the anti-spoofing detector from a biometric data captured during an authentication phase is rejected; and
- Uniquely assigning said rejection criterion to said user.

2. The method according to claim 1, wherein the anti-spoofing detector uses an anti-spoofing algorithm and wherein the method comprises the steps:
- Generating by the anti-spoofing algorithm a first set (81) comprising scores of each of said plurality (71) of biometric data;
- Selecting the rejection criterion (92) by using both said first set (81) and a model of score probability distribution that has been previously fed with both a second set (82) and a third set (83) generated by the anti-spoofing algorithm, said second set (82) comprising scores of each of a plurality (72) of fake biometric data and said third set (83) comprising scores of each of a plurality (73) of biometric data captured from a plurality of individuals.

3. The method according to claim 2, wherein said model was also fed with a number of additional sets (84a) generated by the anti-spoofing algorithm, each of said additional sets comprising scores of an individual archetype.

4. The method according to claim 2 or 3, wherein a Bayesian inference function is applied to both said first set (81) and the model for selecting the rejection criterion.

5. A method according to claim 1, wherein the anti-spoofing detector uses an anti-spoofing algorithm and wherein the method comprises the steps:
- Generating by the anti-spoofing algorithm a first set (81) comprising scores of each of said plurality (72) of biometric data;
- Selecting the rejection criterion (92) by using both the first set (81) and a model of score probability distribution that has been previously fed with a second set (82) generated by the anti-spoofing algorithm and comprising scores of each of a plurality (72) of fake biometric data.

6. The method according to claim 1, wherein the method comprises the steps:
- Generating by the anti-spoofing detector an additional score of an additional biometric data captured from a user during a subsequent authentication phase; and
- Updating the rejection criterion by using said additional score.

7. The method according to claim 1, wherein the biometric data is of fingerprint, iris or facial type.

8. The method according to claim 1, wherein the rejection criterion is selected by a smart card.

9. A biometric appliance (10) allocated to a user (50) and comprising a biometric sensor (40) and an anti-spoofing detector,
**characterized in that** said biometric appliance comprises at least a processing unit and instructions which cause said processing unit to:
- Capture a plurality of biometric data from a subject identifier of the user during an enrollment phase of said user;
- Select a rejection criterion (92) by using said plurality of biometric data, said rejection criterion defining a range of values for which a score generated by the anti-spoofing detector from a biometric data captured during an authentication phase is rejected; and
- Uniquely assign said rejection criterion to said user.

10. The biometric appliance according to claim 9, wherein the anti-spoofing detector is configured to use an anti-spoofing algorithm and wherein said instructions cause said processing unit to:
- Generate by the anti-spoofing algorithm a first set (81) comprising scores of each of said plurality (71) of biometric data;
- Select the rejection criterion (92) by using both said first set (81) and a model of score probability distribution that has been previously fed with both second and third sets (82, 83) generated by the anti-spoofing algorithm, said second set (82) comprising scores of each of a plurality (72) of fake biometric data and said third set (83) comprising scores of each of a plurality (73) of biometric data captured from a plurality of individuals.

11. The biometric appliance according to claim 10, wherein said model was also fed with a number of additional sets (84a) generated by the anti-spoofing algorithm, each of said additional sets comprising scores of an individual archetype.

12. The biometric appliance according to claim 10 or 11, wherein a Bayesian inference function is applied to both said first set (81) and the model for selecting the rejection criterion.

13. A biometric appliance according to claim 9, wherein the anti-spoofing detector uses an anti-spoofing algorithm and wherein said instructions cause said processing unit to:
- Generate by the anti-spoofing algorithm a first set (81) comprising scores of each of said plurality (71) of biometric data;
- Select the rejection criterion (92) by using both the first set (81) and a model of score probability distribution that has been previously fed with a second set (82) generated by the anti-spoofing algorithm and comprising scores of each of a plurality (72) of fake biometric data.

14. The biometric appliance according to claim 9, wherein said instructions cause said processing unit to:
- Generate by the anti-spoofing detector an additional score of an additional biometric data captured from a user during a subsequent authentication phase; and
- Update the rejection criterion by using said additional score.

15. The biometric appliance according to claim 9, wherein the biometric appliance is a smart card.
